# EUROPEAN PATENT SPECIFICATION

(11) **EP 4 270 623 B1**
(45) Date of publication and mention of the grant of the patent: **01.07.2026**
(21) Application number: 22817862.0
(22) Date of filing: 22.09.2022
(51) Int. Cl.: H01M 50/367, H01M 50/383, H01M 50/213, H01M 50/291

(54) **BATTERY BOX AND BATTERY MODULE**
BATTERIEKASTEN UND BATTERIEMODUL
BOÎTIER DE BATTERIE ET MODULE DE BATTERIE

(30) Priority: 20.04.2022 CN 202210419599; 20.04.2022 CN 202220922973 U
(43) Date of publication of application: 01.11.2023
(73) Proprietor: Eve Power Co., Ltd., Jingmen, Hubei 448000 (CN)
(72) Inventor: QIU, Wencong, Hubei 448000 (CN); LI, Fan, Hubei 448000 (CN); CHEN, Zhiwei, Hubei 448000 (CN); CHEN, Chachai, Hubei 448000 (CN); FENG, Yanqiang, Hubei 448000 (CN)
(74) Representative: Murgitroyd & Company
(86) International application number: PCT/CN2022/120392
(87) International publication number: WO 2023/173714

(56) References cited:
- CN-A- 111 416 082
- CN-A- 113 540 683
- CN-A- 113 725 551
- CN-A- 114 006 124
- CN-A- 114 784 450
- CN-U- 214 153 046
- CN-U- 214 153 046
- CN-U- 214 378 654
- CN-U- 214 378 654

## Description

### TECHNICAL FIELD

The present application relates to the field of power batteries, for example, to a battery box body and a battery module.

### BACKGROUND

A battery box body of a large cylindrical battery includes an accommodating cavity configured to accommodate battery cells, and is provided with a pressure relief valve. When a thermal runaway occurs in the battery cells, substances enter the pressure relief valve from the accommodating cavity. A pressure relief path is relatively short, and cooling effect is not ideal during a pressure relief process. High-temperature substances sprayed are easy to burn and heat spread, resulting in fire hazards.

CN214378654U discloses a thermal diffusion protection structure of a battery pack. The thermal diffusion protection structure includes a box cover, a box body, and a fireproof board. A pressure relief explosion-proof valve is arranged on the box body or/and the box cover. The fireproof board is arranged in the box body and separates the box body into an accommodating cavity for placing a battery core stack body or a battery core direct connection group.

### SUMMARY

The present application provides a battery box body and a battery module to reduce a temperature of high-temperature substances, so that the temperature of the high-temperature substances is lower than an ignition point when the high-temperature substances reach at a pressure relief valve, thereby preventing from firing and improving safety and reliability.

A battery box body is provided. The battery box body includes a base plate assembly and a side beam assembly disposed surrounding the base plate assembly. The base plate assembly is divided into a first region and a second region, the first region is configured for accommodating the battery cells, and the second region is provided with a support plate;
the base plate assembly includes an outer plate and an inner plate, a first pressure relief cavity is defined by the outer plate and the inner plate, and a portion of a cavity wall of the first pressure relief cavity is configured to be capable of being occluded by the battery cells;
a second pressure relief cavity is defined by the support plate and the inner plate, and other portion of the cavity wall of the first pressure relief cavity is communicated with the second pressure relief cavity; and
an inner cavity of the side beam assembly is provided with a third pressure relief cavity, the second pressure relief cavity is communicated with the third pressure relief cavity, and the side beam assembly is provided with a pressure relief valve communicated with the third pressure relief cavity.

A battery module is provided The battery module includes battery cells and the battery box body mentioned above, the battery cells are disposed in the first region.

### BRIEF DESCRIPTION OF THE DRAWINGS

FIG. 1 is a schematic structural view of a battery box body in a view angle provided by an embodiment of the present application;
FIG. 2 is a cross-sectional view in A-A direction of FIG. 1;
FIG. 3 is an enlarged view at I of FIG. 2;
FIG. 4 is a schematic structural view of a battery box body in another view angle provided by an embodiment of the present application;
FIG. 5 is a schematic structural view of a second side beam provided by an embodiment of the present application.

In the above figures:
1. Base plate assembly; 11. Outer plate; 12. Inner plate; 121. Carrier plate; 1211. First through hole; 122. Spacing plate; 13. Strainer plate; 1A. First pressure relief cavity;
2. Side beam assembly; 21. Isolation wall; 22. First side beam; 23. Second side beam; 231. Horizontal side beam; 2311. Pressure relief valve; 232. Vertical side beam; 24. Third side beam; 25. Fourth side beam; 2A. Third pressure relief cavity;
3. Support plate; 3A. Second pressure relief cavity;
4. Pressure relief valves; 5. Connection plate; 6. Fastener; 7. Fixing member; 8. First crossbeam; 9. Second crossbeam;

M. First region; N. Second region.

### DETAILED DESCRIPTION OF THE EMBODIMENT

The technical solutions in the embodiments of the present application will be described hereafter with reference to the accompanying drawings, the described embodiments are only a part of embodiments of the present application.

In description of the present application, unless otherwise specified and defined, terms "connected with", "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "up", "above" and "on" the second feature includes that the first feature is right above or obliquely above the second feature, or only indicate that a horizontal height of the first feature is greater than a horizontal height of the second feature. That the first feature is disposed "under", "below", or "underneath" of the second feature include that the first feature is right below or obliquely below the second feature, or only indicate that the horizontal height of the first feature is less than the horizontal height of the second feature.

The embodiment provides a battery module, including an electrical component, battery cells, and a battery box body. Both the electrical component and the battery cells are accommodated in the battery box body. In order to prevent individual battery cell in the battery module from runaway to damage other battery cells, the electrical component, and control systems, etc., the embodiment provides a battery box body.

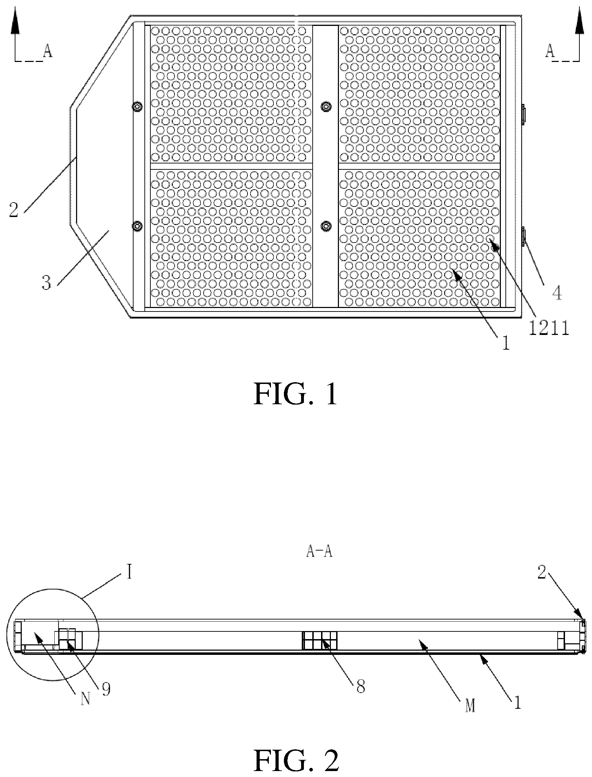

As shown in FIG. 1 to FIG. 3, the battery box body includes a base plate assembly 1 and a side beam assembly 2 disposed surrounding the base plate assembly 1, where the base plate assembly 1 is divided into a first region M and a second region N, the battery cells are disposed in the first region M, and a support plate 3 is disposed in the second region N. The base plate assembly 1 includes an outer plate 11 and an inner plate 12, where a first pressure relief cavity 1A is defined by the outer plate 11 and the inner plate 12, the battery cells are occluded on a portion of a cavity wall of the first pressure relief cavity 1A. A second pressure relief cavity 3A is defined by the support plate 3 and the inner plate 12, and other portion of the cavity wall of the first pressure relief cavity 1A is communicated with the second pressure relief cavity 3A. A third pressure relief cavity 2A is defined by an inner cavity of the side beam assembly 2, the second pressure relief cavity 3A is communicated with the third pressure relief cavity 2A, and the side beam assembly 2is installed with a pressure relief valve 4 communicated with the third pressure relief cavity 2A.

When a thermal runaway occurs in one or more of the battery cells, high-temperature substances sprayed from the battery cells where the thermal runaway occurs are diffused in the first pressure relief cavity 1A, and a first pressure relief layer formed by the first pressure relief cavity 1A is separated from a battery cell layer where the battery cells are located, so as to ensure that other battery cells on an upper layer of the inner plate 12 are not affected during a pressure relief process, thereby preventing other battery cells from being affected. A pressure relief channel is defined by the first pressure relief cavity 1A, the second pressure relief cavity 3A, and the third pressure relief cavity 2A, and after passing through the pressure relief channel, the high-temperature substances are relieved through a pressure relief valve 4. When the high-temperature substances pass through the first pressure relief cavity 1A, the second pressure relief cavity 3A, and the third pressure relief cavity 2A, three pressure relief cavity structures respectively take away a large amount of heat to form three times of cooling, and when the high-temperature substances reach at the pressure relief valve 4 of the box body, a temperature of the high-temperature substances are lower than an ignition point to prevent fire, which is more safe and reliable.

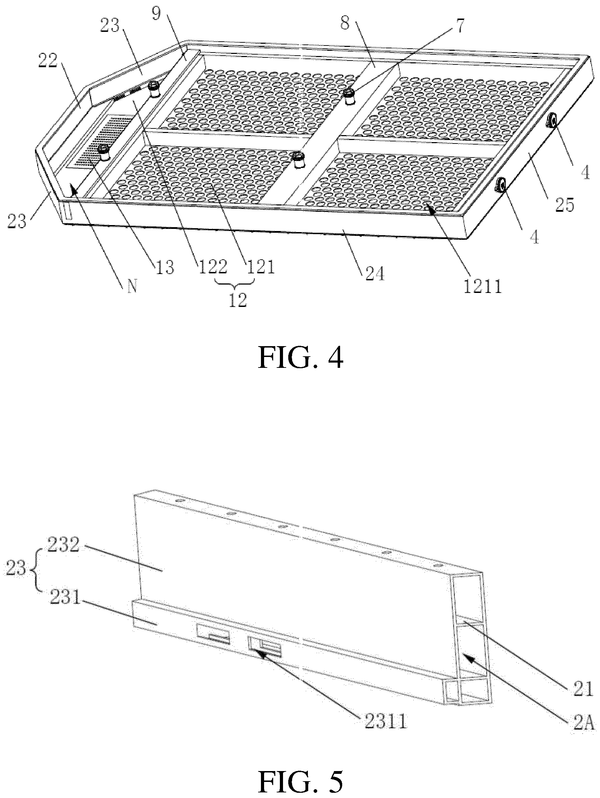

As shown in FIG. 4, the inner plate 12 includes a carrier plate 121 and a spacing plate 122, where each of the battery cells is occluded at a side of a corresponding one of first through hole 1211 defined in the carrier plate 121, and the high-temperature substances sprayed from the battery cells where the thermal runaway occurs enter the first pressure relief cavity 1A through the first through holes 1211 and are diffused, so as to realize that the first pressure relief cavity 1A is separated from the battery cells. In the embodiment, the battery cells are cylindrical battery cells, the first through holes 1211 are circular holes, a bottom area of each of the cylindrical battery cells is not less than a cross-sectional area of a corresponding one of the first through holes 1211, to ensure that the high-temperature substances enter the first pressure relief cavity 1A as much as possible, and to prevent leakage of the substances from affecting other battery cells. A plurality of first through holes 1211 are disposed in the carrier plate 121 and arranged in a form such as a plurality of rows or a matrix, so that the carrier plate 121 is a honeycomb plate.

In other embodiments, the battery cells may also be square battery cells, etc., and structures such as the carrier plate 121 and the first through holes 1211 may be disposed accordingly, the embodiment is not limited thereto.

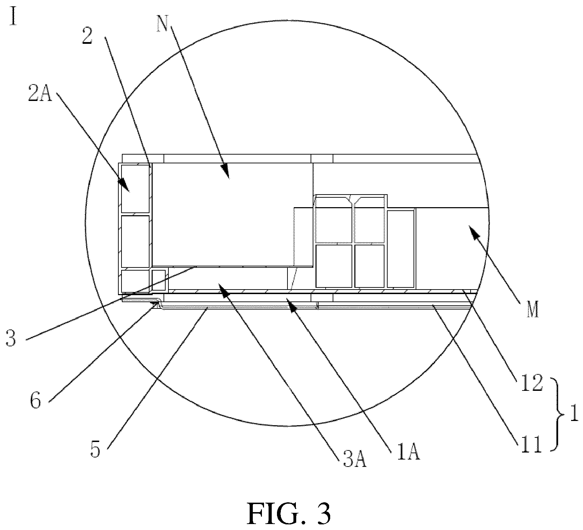

As shown in FIG. 3 and FIG. 4, the second pressure relief cavity 3A is defined by the spacing plate 122 and the support plate 3, and the first pressure relief cavity 1A is communicated with the second pressure relief cavity 3A through second through holes defined in the spacing plate 122. A strainer plate 13 is disposed on the second through holes defined in the spacing plate 122, and a plurality of smaller holes are defined on the strainer plate 13 to prevent large particulate substances from entering the second pressure relief cavity 3A, thereby preventing the pressure relief channel from being blocked by the high-temperature substances sprayed from the battery cells, and resulting in unsmooth pressure relief. The high-temperature substances are filtered through the strainer plate 13, and the strainer plate 13 may be replaced periodically in a later period. In the embodiment, a phase change material layer is affixed on the strainer plate 13, and the temperature of the high-temperature substances may be reduced through the phase change material layer.

The outer plate 11 is a steel plate with a high melting point, is not easy to melt, and may reduce the temperature of the high-temperature substances.

As shown in FIG. 5, isolation walls 21 are disposed in the third pressure relief cavity 2A, so that the third pressure relief cavity 2A includes a plurality of cavities communicated with each other, and a plurality of isolation walls 21 may be arranged in parallel and at intervals to form an s-shaped cavity. Alternatively, the plurality of isolation walls 21 are arranged at intervals, and the isolation walls 21 may have included angles to form the plurality of cavities, holes are defined in the isolation walls 21, and the cavities are communicated with each other. Alternatively, the plurality of isolation walls 21 are disposed with different shapes, such as one or a combined shape of T-shaped, L-shaped, a plurality of continuous L-shaped, cross-shaped, and concave-shaped, ect., so that the third pressure relief cavity 2A forms a "labyrinth" cavity structure, and a structural shape and a splicing shape of the isolation walls 21 may be referred to related art to form a labyrinth with a simple shape or a complex shape, the embodiment is not limited thereto. When the high-temperature substances flow in the third pressure relief cavity 2A, a length of the third pressure relief cavity 2A is increased, and pressure relief time is prolonged, thereby reducing the temperature of the high-temperature substances.

As shown in FIG. 4 and FIG. 5, a cross section of the second region N is an isosceles trapezoid, the side beam assembly 2 includes a first side beam 22 and second side beams 23 symmetrically communicated with both ends of the first side beam 22, pressure relief holes 2311 are defined in the second side beams 22, and the second pressure relief cavity 3A is communicated with the third pressure relief cavity 2A through the pressure relief holes 2311. The pressure relief holes 2311 are defined on two symmetrical second side beams 23, the high-temperature substances are respectively output from the two second side beams 23 to two sides to disperse the high-temperature substances, which is beneficial to reduce the temperature.

As shown in FIG. 5, each of the second side beams 23 has an L-shaped cross section, and includes a horizontal side beam 231 and a vertical side beam 232 communicated with each other. The horizontal side beam 231 is located in the second region N, and the second pressure relief cavity 3A is communicated with the horizontal side beam 231. The length of the third pressure relief cavity 2A is prolonged by disposing the L-shaped side beam assembly 2. In the embodiment, the horizontal side beam 231 is provided with a plurality of cavities arranged along a horizontal direction, the vertical side beam 232 is provided with a plurality of cavities arranged along a vertical direction, and the isolation walls 21 are provided with openings to communicate between the cavities.

The two second side beams 23 are symmetrical along a symmetrical plane, two pressure relief valves 4 are provided and installed on the side beam assembly 2 and located at a side of the first region M away from the second region N to prolong a conveying path of the high-temperature substances, and the two pressure relief valves 4 are symmetrical along the symmetrical plane. That is, the two side beams 23 and the two pressure relief valves 4 are symmetrical along the same symmetrical plane, so that pressure relief pressure of each of the two pressure relief valves 4 is reduced to improve reliability.

As shown in FIG. 4, the side beam assembly 2 further includes a fourth side beam 25 parallel to the first side beam 22, and a third side beam 24 to connect the second side beam 23 with the fourth side beam 25, where the pressure relief valve 4 is installed on the fourth side beam 25, and a output path of the high-temperature substances in the third pressure relief cavity 2A is defined by the second side beam 23, the third side beam 24, the fourth side beam 25, and the pressure relief valves 4 located on a corresponding side.

As shown in FIG. 3, the battery box body further includes a connection plate 5 and a fastener 6, where the fastener 6 passes through the connection plate 5, the base plate assembly 1, and the side beam assembly 2 in sequence, so that the connection plate 5, the base plate assembly 1, and the side beam assembly 2 are connected with each other.

As shown in FIG. 4, the battery box body further includes a first crossbeam 8, where the first crossbeam 8 is configured to divide the first region M into a plurality of installation regions, and each of the installation regions is configured to install a group of the battery cells, so that the battery cells are arranged in groups to realize cell to pack, a number of components is reduced, and cost is reduced; and the first cross beam 8 is connected to the base plate assembly 1 and the side beam assembly 2 by a fixing member 7 to improve structural strength. The fixing member 7 may be a combination of a long screw and a nut, where the long screw penetrates through the base plate assembly 1 and the first cross beam 8, the nut abuts against a side of the base plate assembly 1 away from the first cross beam 8. In the embodiment, the first crossbeam 8 is a cross beam. In the embodiment, the cross beam divides the first region M into four installation regions to improve the structural strength. In other embodiments, a plurality of first crossbeams 8 may be provided to divide the first region M into eight installation regions or more. The plurality of first crossbeams 8 may be arranged in parallel and at intervals, so that the plurality of installation regions may be arranged in a row or a column according to usage requirements, the embodiment is not limited to thereto.

As shown in FIG. 4, the battery box body further includes a second crossbeam 9, where the second crossbeam 9 is provided to separate the first region M from the second region N, and the second region N is configured to install the electrical component, so as to prevent the electrical component, a control system and the like from being damaged when the thermal runaway occurs in the battery cells. Similarly, the second crossbeam 9 may also be connected to the base plate assembly 1 by the fixing member 7.

## Claims

1. A battery box body, comprising a base plate assembly (1) and a side beam assembly (2) disposed surrounding the base plate assembly (1);
wherein the base plate assembly (1) is divided into a first region (M) and a second region (N), the first region (M) is configured for accommodating battery cells, and the second region (N) is provided with a support plate (3); and
wherein the base plate assembly (1) comprises an outer plate (11) and an inner plate (12), a first pressure relief cavity (1A) is defined by the outer plate (11) and the inner plate (12), and a portion of a cavity wall of the first pressure relief cavity (1A) is configured to be capable of being occluded by the battery cells;
**characterized in that** a second pressure relief cavity (3A) is defined by the support plate (3) and the inner plate (12), and other portion of the cavity wall of the first pressure relief cavity (1A) is communicated with the second pressure relief cavity (3A); and
an inner cavity of the side beam assembly (2) is provided with a third pressure relief cavity (2A), the second pressure relief cavity (3A) is communicated with the third pressure relief cavity (2A), and the side beam assembly (2) is provided with a pressure relief valve (4) communicated with the third pressure relief cavity (2A).

2. The battery box body according to claim 1, **characterized in that** the inner plate (12) comprises a carrier plate (121) and a spacing plate (122), wherein each of the battery cells is occluded at a side of a corresponding one of first through holes (1211) defined in the carrier plate (121), the second pressure relief cavity (3A) is defined by the spacing plate (122) and the support plate (3), and the first pressure relief cavity (1A) is communicated with the second pressure relief cavity (3A) through second through holes defined in the spacing plate (122).

3. The battery box body according to claim 2, **characterized in that** a strainer plate (13) is disposed on the second through holes defined in the spacing plate (122), and a phase change material layer is affixed on the strainer plate (13).

4. The battery box body according to claim 1, **characterized in that** isolation walls (21) are disposed in the third pressure relief cavity (2A), and configured to divide the third pressure relief cavity (2A) into a plurality of cavities communicated with each other.

5. The battery box body according to claim 1, **characterized in that** a cross section of the second region (N) is an isosceles trapezoid, the side beam assembly (2) comprises a first side beam (22) and second side beams (23) symmetrically communicated with both ends of the first side beam (22), pressure relief holes (2311) are defined in the second side beams (22), and the second pressure relief cavity (3A) is communicated with the third pressure relief cavity (2A) through the pressure relief holes (2311).

6. The battery box body according to claim 5, **characterized in that** each of the second side beams (23) has an L-shaped cross section and comprises a horizontal side beam (231) and a vertical side beam (232) communicated with each other, wherein the horizontal side beam (231) is located in the second region (N), and the second pressure relief cavity (3A) is communicated with the horizontal side beam (231).

7. The battery box body according to claim 6, **characterized in that** two second side beams (23) are symmetrical along a symmetrical plane, two pressure relief valves (4) are provided, and installed on the side beam assembly (2) and located at a side of the first region (M) away from the second region (N), and the two pressure relief valves (4) are symmetrical along the symmetrical plane.

8. The battery box body according to claim 1, **characterized in that** the battery box body further comprises a connection plate (5) and a fastener (6), wherein the fastener (6) is configured to pass through the connection plate (5), the base plate assembly (1), and the side beam assembly (2) in sequence, and the fastener (6) is configured to enable the connecting plate (5), the base plate assembly (1), and the side beam assembly (2) to be connected with each other.

9. The battery box body according to claim 1, **characterized in that** the battery box body further comprises a first crossbeam (8), the first crossbeam (8) is a cross beam, the first crossbeam (8) is configured to divide the first region (M) into a plurality of installation regions, and each of the installation regions is configured to install a group of the battery cells.

10. The battery box body according to claim 1, **characterized in that** the battery box body further comprises a second crossbeam (9), the second crossbeam (9) is configured to separate the first region (M) from the second region (N), and the second region (N) is configured to install an electrical component.

11. A battery module, **characterized in that** the battery module comprises the battery box body according to any one of claims 1-10 and battery cells.

12. The battery module according to claim 11, **characterized in that** the inner plate (12) comprises a carrier plate (121) and a spacing plate (122), wherein each of the battery cells is occluded at a side of a corresponding one of first through holes (1211) defined in the carrier plate (121), the second pressure relief cavity (3A) is defined by the spacing plate (122) and the support plate (3), and the first pressure relief cavity (1A) is communicated with the second pressure relief cavity (3A) through second through holes defined in the spacing plate (122).

13. The battery module according to claim 12, **characterized in that** a strainer plate (13) is disposed on the second through holes defined in the spacing plate (122), a phase change material layer is affixed on the strainer plate (13).

14. The battery module according to claim 11, **characterized in that** isolation walls (21) are disposed in the third pressure relief cavity (2A), and configured to divide the third pressure relief cavity (2A) into a plurality of cavities communicated with each other.

15. The battery module according to claim 11, **characterized in that** the battery module further comprises an electrical component, the electrical component is disposed on the support plate (3).

## Patentansprüche

1. Ein Batteriekastenkörper, umfassend eine Bodenplattenbaugruppe (1) und eine Seitenträgerbaugruppe (2), die die Bodenplattenbaugruppe (1) umgibt;
wobei die Bodenplattenbaugruppe (1) in einen ersten Bereich (M) und einen zweiten Bereich (N) unterteilt ist, der erste Bereich (M) zur Aufnahme von Batteriezellen ausgebildet ist und der zweite Bereich (N) mit einer Stützplatte (3) versehen ist; und
wobei die Bodenplattenbaugruppe (1) eine Außenplatte (11) und eine Innenplatte (12) umfasst, ein erster Druckentlastungshohlraum (1A) durch die Außenplatte (11) und die Innenplatte (12) definiert ist und ein Abschnitt einer Hohlraumwand des ersten Druckentlastungshohlraums (1A) so ausgebildet ist, dass er durch die Batteriezellen verschlossen werden kann;
**dadurch gekennzeichnet, dass** ein zweiter Druckentlastungshohlraum (3A) durch die Stützplatte (3) und die Innenplatte (12) gebildet wird und ein weiterer Abschnitt der Hohlraumwand des ersten Druckentlastungshohlraums (1A) mit dem zweiten Druckentlastungshohlraum (3A) in Verbindung steht; und
ein innerer Hohlraum der Seitenträgerbaugruppe (2) mit einem dritten Druckentlastungshohlraum (2A) versehen ist, der zweite Druckentlastungshohlraum (3A) mit dem dritten Druckentlastungshohlraum (2A) in Verbindung steht und die Seitenträgerbaugruppe (2) mit einem Druckentlastungsventil (4) versehen ist, das mit dem dritten Druckentlastungshohlraum (2A) in Verbindung steht.

2. Batteriekastenkörper nach Anspruch 1, **dadurch gekennzeichnet, dass** die Innenplatte (12) eine Trägerplatte (121) und eine Distanzplatte (122) umfasst, wobei jede der Batteriezellen an einer Seite eines entsprechenden der in der Trägerplatte (121) ausgebildeten ersten Durchgangsöffnungen (1211) verschlossen ist, der zweite Druckentlastungshohlraum (3A) durch die Distanzplatte (122) und die Stützplatte (3) gebildet wird, und der erste Druckentlastungshohlraum (1A) über zweite Durchgangsöffnungen, die in der Distanzplatte (122) ausgebildet sind, mit dem zweiten Druckentlastungshohlraum (3A) in Verbindung steht.

3. Batteriekastenkörper nach Anspruch 2, **dadurch gekennzeichnet, dass** eine Siebplatte (13) auf den in der Distanzplatte (122) ausgebildeten zweiten Durchgangsöffnungen angeordnet ist und eine Phase-Change-Material-Schicht auf der Siebplatte (13) befestigt ist.

4. Batteriekastenkörper nach Anspruch 1, **dadurch gekennzeichnet, dass** Trennwände (21) in dem dritten Druckentlastungshohlraum (2A) angeordnet sind und so ausgebildet sind, dass sie den dritten Druckentlastungshohlraum (2A) in eine Vielzahl von miteinander in Verbindung stehenden Hohlräumen unterteilen.

5. Batteriekastenkörper nach Anspruch 1, **dadurch gekennzeichnet, dass** ein Querschnitt des zweiten Bereichs (N) ein gleichschenkliges Trapez ist, die Seitenträgerbaugruppe (2) einen ersten Seitenträger (22) und zweite Seitenträger (23) umfasst, die symmetrisch mit beiden Enden des ersten Seitenträgers (22) verbunden sind, in den zweiten Seitenträgern (22) sind Druckentlastungslöcher (2311) ausgebildet, und der zweite Druckentlastungshohlraum (3A) ist über die Druckentlastungslöcher (2311) mit dem dritten Druckentlastungshohlraum (2A) verbunden.

6. Batteriekastenkörper nach Anspruch 5, **dadurch gekennzeichnet, dass** jeder der zweiten Seitenträger (23) einen L-förmigen Querschnitt aufweist und einen horizontalen Seitenträger (231) sowie einen vertikalen Seitenträger (232) umfasst, die miteinander verbunden sind, wobei sich der horizontale Seitenträger (231) im zweiten Bereich (N) befindet und der zweite Druckentlastungshohlraum (3A) mit dem horizontalen Seitenträger (231) verbunden ist.

7. Batteriekastenkörper nach Anspruch 6, **dadurch gekennzeichnet, dass** zwei zweite Seitenträger (23) entlang einer Symmetrieebene symmetrisch sind, zwei Druckentlastungsventile (4) vorgesehen sind, die an der Seitenträgerbaugruppe (2) angebracht sind und sich an einer Seite des ersten Bereichs (M) befinden, die vom zweiten Bereich (N) entfernt ist, und die beiden Druckentlastungsventile (4) entlang der Symmetrieebene symmetrisch sind.

8. Batteriekastenkörper nach Anspruch 1, **dadurch gekennzeichnet, dass** der Batteriekastenkörper ferner eine Verbindungsplatte (5) und ein Befestigungselement (6) umfasst, wobei das Befestigungselement (6) so ausgebildet ist, dass es nacheinander durch die Verbindungsplatte (5), die Bodenplattenbaugruppe (1) und die Seitenträgerbaugruppe (2) nacheinander zu durchdringen, und das Befestigungselement (6) so ausgebildet ist, dass die Verbindungsplatte (5), die Bodenplattenbaugruppe (1) und die Seitenträgerbaugruppe (2) miteinander verbunden werden können.

9. Batteriekastenkörper nach Anspruch 1, **dadurch gekennzeichnet, dass** der Batteriekastenkörper ferner einen ersten Querträger (8) umfasst, wobei der erste Querträger (8) ein Querträger ist, der erste Querträger (8) so ausgebildet ist, dass er den ersten Bereich (M) in eine Vielzahl von Einbaubereichen unterteilt, und jeder der Einbaubereiche so ausgebildet ist, dass darin eine Gruppe der Batteriezellen eingebaut werden kann.

10. Batteriekastenkörper nach Anspruch 1, **dadurch gekennzeichnet, dass** der Batteriekastenkörper ferner einen zweiten Querträger (9) umfasst, wobei der zweite Querträger (9) so ausgebildet ist, dass er den ersten Bereich (M) vom zweiten Bereich (N) trennt, und der zweite Bereich (N) so ausgebildet ist, dass darin eine elektrische Komponente installiert werden kann.

11. Batteriemodul, **dadurch gekennzeichnet, dass** das Batteriemodul den Batteriekastenkörper gemäß einem der Ansprüche 1 bis 10 und Batteriezellen umfasst.

12. Batteriemodul nach Anspruch 11, **dadurch gekennzeichnet, dass** die Innenplatte (12) eine Trägerplatte (121) und eine Distanzplatte (122) umfasst, wobei jede der Batteriezellen an einer Seite einer entsprechenden der in der Trägerplatte (121) definierten ersten Durchgangsöffnungen (1211) eingeschlossen ist,
der zweite Druckentlastungshohlraum (3A) durch die Distanzplatte (122) und die Stützplatte (3) definiert ist und der erste Druckentlastungshohlraum (1A) über zweite Durchgangsöffnungen, die in der Distanzplatte (122) definiert sind, mit dem zweiten Druckentlastungshohlraum (3A) in Verbindung steht.

13. Batteriemodul nach Anspruch 12, **dadurch gekennzeichnet, dass** eine Siebplatte (13) auf den in der Distanzplatte (122) ausgebildeten zweiten Durchgangsöffnungen angeordnet ist, wobei eine Phase-Change-Material-Schicht auf der Siebplatte (13) befestigt ist.

14. Batteriemodul nach Anspruch 11, **dadurch gekennzeichnet, dass** Trennwände (21) in dem dritten Druckentlastungshohlraum (2A) angeordnet sind und so ausgebildet sind, dass sie den dritten Druckentlastungshohlraum (2A) in eine Vielzahl von miteinander in Verbindung stehenden Hohlräumen unterteilen.

15. Batteriemodul nach Anspruch 11, **dadurch gekennzeichnet, dass** das Batteriemodul ferner eine elektrische Komponente umfasst, wobei die elektrische Komponente auf der Stützplatte (3) angeordnet ist.

## Revendications

1. Corps de boîtier de batterie, comprenant un ensemble de plaque de base (1) et un ensemble de poutre latérale (2) disposé de manière à entourer l'ensemble de plaque de base (1) ;
dans lequel l'ensemble de plaque de base (1) est divisé en une première région (M) et une deuxième région (N), la première région (M) étant configurée pour recevoir des cellules de batterie, et la deuxième région (N) étant pourvue d'une plaque de support (3) ; et
dans lequel l'ensemble de plaque de base (1) comprend une plaque extérieure (11) et une plaque intérieure (12), une première cavité de décompression (1A) est définie par la plaque extérieure (11) et la plaque intérieure (12), et une partie d'une paroi de la première cavité de décompression (1A) est configurée de manière à pouvoir être obstruée par les cellules de batterie ;
**caractérisé en ce qu'**une deuxième cavité de décompression (3A) est définie par la plaque de support (3) et la plaque intérieure (12), et qu'une autre partie de la paroi de la première cavité de décompression (1A) communique avec la deuxième cavité de décompression (3A) ; et
une cavité interne de l'ensemble de poutre latérale (2) est pourvue d'une troisième cavité de décompression (2A), la deuxième cavité de décompression (3A) communique avec la troisième cavité de décompression (2A), et l'ensemble de poutre latérale (2) est pourvu d'une soupape de décompression (4) communiquant avec la troisième cavité de décompression (2A).

2. Corps de boîtier de batterie selon la revendication 1, **caractérisé en ce que** la plaque intérieure (12) comprend une plaque de support (121) et une plaque d'espacement (122), dans lequel chacune des cellules de batterie est logée sur un côté d'un trou traversant correspondant parmi les premiers trous traversants (1211) définis dans la plaque de support (121), la deuxième cavité de décompression (3A) est définie par la plaque d'espacement (122) et la plaque de support (3), et la première cavité de décompression (1A) communique avec la deuxième cavité de décompression (3A) par l'intermédiaire de deuxièmes trous traversants définis dans la plaque d'espacement (122).

3. Corps de boîtier de batterie selon la revendication 2, **caractérisé en ce qu'**une plaque filtrante (13) est disposée sur les seconds trous traversants définis dans la plaque d'espacement (122), et une couche de matériau à changement de phase est fixée sur la plaque filtrante (13).

4. Corps de boîtier de batterie selon la revendication 1, **caractérisé en ce que** des parois d'isolation (21) sont disposées dans la troisième cavité de décompression (2A) et configurées pour diviser la troisième cavité de décompression (2A) en une pluralité de cavités communiquant entre elles.

5. Corps de boîtier de batterie selon la revendication 1, **caractérisé en ce que** la section transversale de la deuxième région (N) est un trapèze isocèle, l'ensemble de poutre latérale (2) comprend une première poutre latérale (22) et des deuxièmes poutres latérales (23) communiquant symétriquement avec les deux extrémités de la première poutre latérale (22),
des trous de décompression (2311) sont définis dans les deuxièmes poutres latérales (22), et la deuxième cavité de décompression (3A) communique avec la troisième cavité de décompression (2A) par l'intermédiaire des trous de décompression (2311).

6. Corps de boîtier de batterie selon la revendication 5, **caractérisé en ce que** chacune des deuxièmes poutres latérales (23) présente une section transversale en forme de L et comprend une poutre latérale horizontale (231) et une poutre latérale verticale (232) reliées l'une à l'autre, dans lequel la poutre latérale horizontale (231) est située dans la deuxième région (N), et la deuxième cavité de décompression (3A) communique avec la poutre latérale horizontale (231).

7. Corps de boîtier de batterie selon la revendication 6, **caractérisé en ce que** deux deuxièmes poutres latérales (23) sont symétriques le long d'un plan de symétrie, deux soupapes de décompression (4) sont prévues et installées sur l'ensemble de poutre latérale (2) et situées sur un côté de la première région (M) éloigné de la deuxième région (N), et les deux soupapes de décompression (4) sont symétriques le long du plan de symétrie.

8. Corps de boîtier de batterie selon la revendication 1, **caractérisé en ce que** le corps de boîtier de batterie comprend en outre une plaque de connexion (5) et une fixation (6), dans lequel la fixation (6) est configurée pour traverser la plaque de connexion (5), l'ensemble de plaque de base (1), et l'ensemble de poutre latérale (2) successivement, et la fixation (6) est configurée pour permettre à la plaque de connexion (5), à l'ensemble de plaque de base (1) et à l'ensemble de poutre latérale (2) d'être reliés les uns aux autres.

9. Corps de boîtier de batterie selon la revendication 1, **caractérisé en ce que** le corps de boîtier de batterie comprend en outre une première traverse (8), la première traverse (8) étant une traverse, la première traverse (8) étant configurée pour diviser la première région (M) en une pluralité de régions d'installation, et chacune des régions d'installation étant configurée pour installer un groupe de cellules de batterie.

10. Corps de boîtier de batterie selon la revendication 1, **caractérisé en ce que** le corps de boîtier de batterie comprend en outre une deuxième traverse (9), la deuxième traverse (9) étant configurée pour séparer la première région (M) de la deuxième région (N), et la deuxième région (N) étant configurée pour installer un composant électrique.

11. Module de batterie, **caractérisé en ce que** le module de batterie comprend le corps de boîtier de batterie selon l'une quelconque des revendications 1 à 10 et des cellules de batterie.

12. Module de batterie selon la revendication 11, **caractérisé en ce que** la plaque intérieure (12) comprend une plaque de support (121) et une plaque d'espacement (122), dans lequel chacune des cellules de batterie est enfermée sur un côté d'un trou traversant correspondant parmi les premiers trous traversants (1211) définis dans la plaque de support (121),
la deuxième cavité de décompression (3A) est définie par la plaque d'espacement (122) et la plaque de support (3), et la première cavité de décompression (1A) communique avec la deuxième cavité de décompression (3A) par l'intermédiaire de deuxièmes trous traversants définis dans la plaque d'espacement (122).

13. Module de batterie selon la revendication 12, **caractérisé en ce qu'**une plaque filtrante (13) est disposée sur les seconds trous traversants définis dans la plaque d'espacement (122), une couche de matériau à changement de phase est fixée sur la plaque filtrante (13).

14. Module de batterie selon la revendication 11, **caractérisé en ce que** des parois d'isolation (21) sont disposées dans la troisième cavité de décompression (2A) et configurées pour diviser la troisième cavité de décompression (2A) en une pluralité de cavités communiquant entre elles.

15. Module de batterie selon la revendication 11, **caractérisé en ce que** le module de batterie comprend en outre un composant électrique, le composant électrique étant disposé sur la plaque de support (3).
